# EUROPÄISCHE PATENTANMELDUNG

(11) **EP 0 948 954 A2**
(43) Veröffentlichungstag der Anmeldung: **13.10.1999**
(21) Anmeldenummer: 99103933.0
(22) Anmeldetag: 08.03.1999
(51) Int. Cl.: A61G 5/02

(54) **Personenbeförderungsmittel und eine Antriebsvorrichtung für ein Personenbeförderungsmittel**

(30) Priorität: 08.04.1998 DE 19815687; 02.11.1998 DE 19850362
(71) Anmelder: Leonhardt, Wolfgang, 73269 Hochdorf (DE)
(72) Erfinder: Leonhardt, Wolfgang, 73269 Hochdorf (DE)
(74) Vertreter: Gleiss & Grosse

(57) **Zusammenfassung**

Es wird eine Antriebsvorrichtung für ein Personenbeförderungsmittel, insbesondere Rollstuhl, das mindestens einen Sitz mit einer Rückenlehne umfaßt, mit mindestens einem Betätigungselement, mit dessen Hilfe ein Drehmoment auf eine Antriebswelle aufbringbar ist, wobei die auf das Handbetätigungselement aufgebrachte Kraft über einen Antriebsstrang auf mindestens ein Rad des Personenbeförderungsmittel übertragen wird, vorgeschlagen. Die Antriebsvorrichtung zeichnet sich dadurch aus, daß das Handbetätigungselement (15) mit mindestens einem um eine Achse (39) hin und her schwenkbaren Antriebshebel (15) zusammenwirkt, daß der Antriebshebel (15) über einen Freilauf (29) mit der Antriebswelle (31) gekoppelt ist, derart, daß bei einer ersten Schwenkbewegung des Antriebshebels (15) -vom Sitz aus gesehen- nach vorne der Antriebshebel (15) und die Antriebswelle (31) gekoppelt und beim Zurückschwenken der Antriebshebel (15) und die Antriebswelle (31) entkoppelt sind.

## Beschreibung

Die Erfindung betrifft eine Antriebsvorrichtung für ein Personenbeförderungsmittel, insbesondere Rollstuhl, gemäß Oberbegriff des Anspruchs 1 und ein Personenbeförderungsmittel gemäß Oberbegriff des Anspruchs 10 und des Anspruchs 16.

Ein bekanntes Personenbeförderungsmittel umfaßt mindestens drei Räder, einen Sitz mit einer Rückenlehne sowie eine Antriebsvorrichtung. Die mittels Muskelkraft betätigbare Antriebsvorrichtung umfaßt für jede Hand des Bedieners eine Antriebskurbel, die jeweils von einem Handbetätigungselement und einem Antriebshebel gebildet werden. Die Antriebshebel sind drehfest mit einer Antriebswelle gekoppelt, die ihrerseits über einen Antriebsstrang mit einem Rad des Personenbeförderungsmittel verbunden ist. Die um eine Achse, beispielsweise die Mittelachse der Antriebswelle, drehbaren Antriebskurbeln sind spiegelbildlich zu einer senkrecht zur Mittelachse der Antriebswelle verlaufenden Mittelebene angeordnet. Um das Personenbeförderungsmittel vorwärts zu bewegen, werden die Antriebskurbeln gleichsinnig in Fahrtrichtung in Rotation versetzt. Dabei wird die auf die Handbetätigungselemente aufgebrachte Kraft permanent, also während der vollen Umdrehung der Antriebskurbeln, auf die Antriebswelle übertragen. Durch ein Verdrehen der Handbetätigungselemente um eine Hochachse wird das Personenförderungsmittel gelenkt.

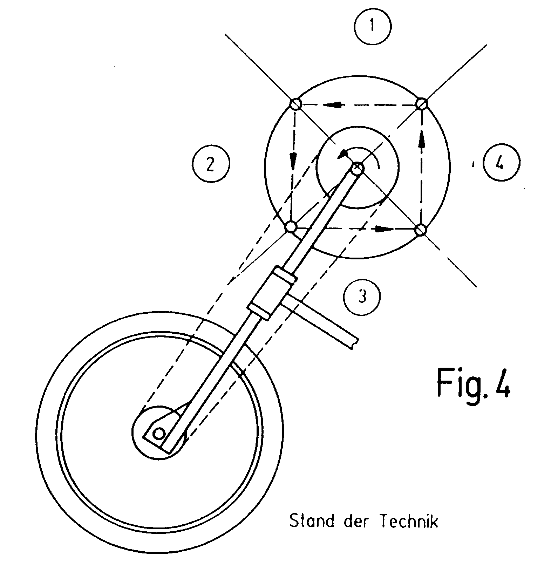

Anhand von Figur 4, die schematisch einen Teil des bekannten Personenbeförderungsmittels zeigt, wird die Funktion der Antriebsvorrichtung und der Bewegungsablauf des Bedieners näher beschrieben. Ausgehend von der ortsfesten Position des sich im Sitz befindlichen Bedieners können im wesentlichen vier gleich große gedachte Arbeitsbereiche (1) bis (4) der nicht dargestellten Antriebskurbeln definiert werden. Beim Durchfahren eines ersten Arbeitsbereichs (1) ist die Stellung der Antriebskurbeln gegenüber dem Bediener günstig, weil dieser eine -vom Sitz aus gesehen- nach vorne gerichtete Kraft auf die Antriebskurbeln aufbringt. Durch das Nachvornedrücken der Antriebskurbeln wird der Körper gegen die Rückenlehne des Sitzes gedrückt und stützt sich an dieser ab. Bei dem sich an den ersten -in Drehrichtung der Antriebskurbeln gesehen- anschließenden zweiten Arbeitsbereich (2) müssen die Antriebskurbeln von den relativ weit ausgestreckten Armen des Bedieners in vertikaler Richtung nach unten gedrückt werden. Die dabei aufzubringende Kraft ist aufgrund der ungünstigen Hebelwirkung nur sehr schwierig oder überhaupt nicht aufzubringen. Beim Durchfahren des dritten Arbeitsbereichs (3) müssen die Antriebskurbeln entgegen der Fahrtrichtung zum Körper hin gezogen werden. Bei dieser Bewegung hat der Körper keinen Halt um sich abzustützen, so daß das Gesäß automatisch nach vorne rutscht. Beim letzten der vier Arbeitsbereiche (4) müssen die Antriebskurbeln im wesentlichen vertikal nach oben gezogen werden, was mit einer äußerst unangenehmen Kraftanstrengung verbunden ist, da hier der Abstand des Körpers zu den Handbetätigungselementen am geringsten ist, wodurch sich ungünstige Hebelverhältnisse einstellen.

Des weiteren hat gezeigt, daß durch die Kurbelbewegung, bei der während der gesamten Umdrehung der Antriebskurbeln permanent eine Antriebskraft aufgebracht wird, der Körper relativ schnell ermüdet. Nachteilig ist ferner, daß bei der Kurbelbewegung das Gesäß ständig auf dem Sitz hin und her rutscht.

Das bekannte Personenbeförderungsmittel wird mit den Händen angetrieben, gelenkt und abgebremst. Zusätzlich muß noch die Schaltung betätigt sowie Signal gegeben werden. Bei diesen Funktionen muß mindestens eine Hand von der Antriebsvorrichtung beziehungsweise den Handbetätigungselementen, die Teil der Lenkung sind, genommen werden. In dieser Fahrsituation ist ein Antrieb und das Lenken des Personenbeförderungsmittels nicht möglich.

Außerdem ist bei dem bekannten Personenbeförderungsmittel nachteilig, daß die Antriebsvorrichtung mit zwei Schenkeln am Rahmen des hinteren Fahrzeugteils befestigt ist. Somit wird ein Einsteigen insbesondere für körperlich behinderte Personen sehr schwierig.

Es ist daher Aufgabe der Erfindung, eine Antriebsvorrichtung und ein Personenbeförderungsmittel zu schaffen, die diese Nachteile nicht aufweisen.

Zur Lösung der Aufgabe wird eine Antriebsvorrichtung vorgeschlagen, die die Merkmale des Anspruchs 1 aufweist. Diese zeichnet sich dadurch aus, daß das Handbetätigungselement mit mindestens einem um eine Achse hin und her schwenkbaren Antriebshebel zusammenwirkt, daß der Antriebshebel über einen Freilauf mit der Antriebswelle gekoppelt ist, derart, daß bei einer ersten Schwenkbewegung des Antriebshebels -vom Sitz aus gesehen- nach vorne der Antriebshebel und die Antriebswelle gekoppelt und beim Zurückschwenken der Antriebshebel und die Antriebswelle entkoppelt sind. Dadurch kann eine bequeme, aufrechte Sitzhaltung eingenommen und während der Betätigung der Antriebsvorrichtung auch beibehalten werden. In der aufrechten Sitzhaltung wird der Antriebshebel zum Aufbringen eines Drehmoments auf die Antriebswelle ausschließlich nach vorne in Fahrtrichtung gedrückt. Dabei wird der Körper gegen die Rückenlehne des Sitzes gepreßt und kann sich dadurch in vorteilhafter Weise abstützen. Beim Zurückschwenken des Antriebshebels ist dieser von der Antriebswelle entkoppelt, es wird also keine Kraft auf die Antriebswelle übertragen. Durch die erfindungsgemäße Kopplung des Antriebshebels ist eine sehr günstige Kraftübertragung über das Handbetätigungselement auf die Antriebswelle möglich, insbesondere deshalb, weil der Schwenkwinkel, um den der Antriebshebel hin und her geschwenkt wird, aufgrund des Freilaufs variabel ist. Dadurch kann ein Bediener in vorteilhafter Weise den Schwenkwinkel und somit den Hub der Arme auf seine eigenen Bedürfnisse, beispielsweise auf seine Körpergröße, einstellen. Besonders vorteilhaft ist ferner, daß zwischen zwei Schwenkbewegungen des Antriebshebels zur Beaufschlagung der Antriebswelle mit einem Drehmoment, durch den mit Hilfe des Freilaufs bewirkten Leerhub beim Zurückschwenken des Antriebshebels keine dem Antrieb des Personenbeförderungsmittel dienende Kräfte aufgebracht werden müssen. Durch den Wechsel zwischen Belastung und Entlastung kann der Bediener rhythmisch atmen, wodurch dessen Ausdauer verbessert wird, da bei einer gleichmäßig rhythmischen Atmung der Körper nicht so schnell ermüdet, wie bei einer sich mit der bekannten Antriebsvorrichtung einstellenden nicht-rhythmischen Atmung.

Vorteilhafte Ausführungsformen der Antriebsvorrichtung ergeben sich aus den übrigen Unteransprüchen.

Zur Lösung der Aufgabe wird auch ein Personenbeförderungsmittel vorgeschlagen, das die in Anspruch 10 genannten Merkmale aufweist. Dieses umfaßt mindestens einen mit einer Rückenlehne versehenen Sitz sowie eine Antriebsvorrichtung, die mindestens ein Handbetätigungselement umfaßt. Mit Hilfe des Handbetätigungselements kann ein Drehmoment auf eine Antriebswelle aufgebracht werden. Die auf das Handbetätigungselement aufgebrachte Kraft wird über einen Antriebsstrang, der beispielsweise Kettenräder und mindestens eine Kette aufweist, auf wenigstens ein Rad des Personenbeförderungsmittels übertragen. Dieses zeichnet sich dadurch aus, daß das Handbetätigungselement mit mindestens einem um eine Achse hin und her schwenkbaren Antriebshebel zusammenwirkt, daß der Antriebshebel über einen Freilauf mit der Antriebswelle gekoppelt ist, derart, daß bei einer ersten Schwenkbewegung des Antriebshebels -vom Sitz aus gesehen- nach vorne der Antriebshebel und die Antriebswelle gekoppelt und beim Zurückschwenken der Antriebshebel und die Antriebswelle entkoppelt sind. Hierdurch ist eine bequeme und kraftsparende Benutzung der Antriebsvorrichtung aufgrund der natürlichen, aufrechten Sitzhaltung des Körpers und des Wechsels zwischen Kraftanstrengung (Belastung) und Entlastung möglich. Überdies kann der Bediener frei wählen, in welchem Bereich eines von dem Handbetätigungselement durchlaufenen Teilkreises er den Schwenkwinkel wählt, so daß er eine für ihn angenehme Sitzhaltung während des Hin- und Herschwenkens des Antriebshebels permanent beibehalten kann.

Bei einem bevorzugten Ausführungsbeispiel des Personenbeförderungsmittels ist vorgesehen, daß dieses zwei Fahrzeugteile umfaßt, wobei ein erstes Fahrzeugteil als Rollstuhl ausgebildet und mit einem zweiten Fahrzeugteil kuppelbar ist. Dadurch, daß der Rollstuhl mit dem zweiten Fahrzeugteil, an dem vorzugsweise die Antriebsvorrichtung angebracht ist, lösbar verbunden ist, ist für Behinderte ein Höchstmaß an Flexibilität und Komfort möglich, da diese, bei entsprechender Ausgestaltung der beiden Fahrzeugteile, den Rollstuhl während des Verbindens der beiden Fahrzeugteile miteinander nicht verlassen müssen.

Zur Lösung der Aufgabe wird auch ein Personenbeförderungsmittel vorgeschlagen, welches die Merkmale des Anspruchs 16 aufweist. Dieses Personenbeförderungsmittel weist mindestens einen eine Rückenlehne umfassenden Sitz und eine Antriebseinrichtung auf, die mindestens ein Handbetätigungselement umfaßt, mit dessen Hilfe ein Drehmoment auf eine Antriebswelle aufbringbar ist, wobei die auf das Handbetätigungselement aufgebrachte Kraft über einen Antriebsstrang auf mindestens ein Rad übertragen wird. Das Personenbeförderungsmittel weist ferner zwei parallel und in einem Abstand zueinander liegende Rahmenteile auf. Überdies ist ein Antriebsrahmenteil vorgesehen, an dem der Antriebsstrang, die Antriebsvorrichtung und ein Rad angeordnet sind. Bevorzugt liegt der Antriebsrahmenteil -in Fahrtrichtung gesehen- vor den parallel zueinander liegenden Rahmenteilen. Erfindungsgemäß ist vorgesehen, daß der Antriebsrahmenteil mit einem seitlich von ihm ausgehenden Anlenkschenkel an einem der Rahmenteile angelenkt ist. Mithin wird eine seitlich ausgehende Verbindung zwischen dem Antriebsrahmenteil und einem der Rahmenteile geschaffen, so daß in das Personenbeförderungsmittel auf einfache Art und Weise seitlich eingestiegen werden kann, da nicht über den Anlenkschenkel hinweg eingestiegen werden muß. Die Einstiegsseite liegt dabei auf der dem Anlenkschenkel gegenüberliegenden Seite, also an dem Rahmenteil, an dem der Anlenkschenkel nicht vorgesehen ist.

In besonders bevorzugter Ausführungsform ist vorgesehen, daß der Anlenkschenkel am Antriebsrahmenteil fest angebracht und an den einen Rahmenteil lösbar ankuppelbar ist. Somit kann der Antriebsrahmenteil zusammen mit der Antriebsvorrichtung, dem Antriebsstrang und dem Rad an- und abgekuppelt werden, so daß das Personenbeförderungsmittel sowohl mit oder ohne eigenen Antrieb bereitgestellt werden kann.

Alternativ kann auch vorgesehen sein, daß der Anlenkschenkel sowohl fest mit dem Antriebsrahmenteil als auch fest mit dem einen Rahmenteil verbunden ist. Es wird also ein einstückiger Rahmen des Beförderungsmittels bereitgestellt, der sich durch eine besonders gute Festigkeit beziehungsweise Steifigkeit auszeichnet.

Bei einem bevorzugten Ausführungsbeispiel ist vorgesehen, daß zwischen den beiden Rahmenteilen eine Querstrebe anordenbar ist. Somit weist das Personenbeförderungsmittel -obwohl nur ein Anlenkschenkel zwischen dem Antriebsrahmenteil und dem einen Rahmenteil vorgesehen ist- eine gute Steifigkeit auf, die die Verkehrssicherheit erhöht.

Nach einer Weiterbildung der Erfindung ist vorgesehen, daß die Querstrebe mit den beiden Rahmenteilen lösbar verbindbar, also an- und abkuppelbar ist. Somit kann -wenn das Personenbeförderungsmittel ohne den Antriebsstrang verwendet werden soll- die Querstrebe entnommen werden, so daß nach dem Gebrauch des Personenbeförderungsmittels dieses zusammenlegbar beziehungsweise zusammenklappbar ist, wobei beim Zusammenklappen die beiden parallelen Rahmenteile aufeinander gelegt werden.

Alternativ kann auch vorgesehen sein, daß die Querstrebe fest mit dem Anlenkschenkel verbunden, aber lösbar beziehungsweise ankuppelbar am Rahmenteil anordenbar ist.

Ein besonders bevorzugtes Ausführungsbeispiel zeichnet sich dadurch aus, daß zwischen dem Antriebsrahmenteil und dem anderen Rahmenteil ein Versteifungsschenkel einsetzbar ist. Der Versteifungsschenkel erstreckt sich dabei ebenfalls seitlich vom Antriebsrahmenteil, wobei der Versteifungsschenkel auf der dem Anlenkschenkel gegenüberliegenden Seite am Antriebsrahmenteil vorgesehen ist. Somit kann -wenn der Versteifungsschenkel nicht eingesetzt ist- ein Benutzer leicht in das Personenbeförderungsmittel einsteigen und anschließend den Versteifungsschenkel anbringen beziehungsweise einsetzen, so daß eine besonders feste mechanische Verbindung zwischen dem Antriebsrahmenteil und den beiden parallel zueinander liegenden Rahmenteilen bereitgestellt wird.

In besonders bevorzugter Ausführungsform ist vorgesehen, daß der Versteifungsschenkel mit seinem einen Ende am Antriebsrahmenteil oder an dem anderen der beiden Rahmenteile schwenkbar angeordnet ist und an seinem anderen Ende eine Kupplungseinrichtung aufweist. Somit kann der Versteifungsschenkel vor dem Einsteigen des Benutzers in das Personenbeförderungsmittel aus dem Einstiegsbereich herausgeschwenkt werden, so daß -nachdem der Benutzer im Personenbeförderungsmittel Platz genommen hat- der Versteifungsschenkel wieder in den Einstiegsbereich zurückgeschwenkt werden kann, um dann mit seiner Kupplungseinrichtung am Rahmenteil oder am Antriebsrahmenteil befestigt zu werden.

Alternativ kann vorgesehen sein, daß der Versteifungsschenkel an seinen beiden Enden eine Kupplungseinrichtung aufweist, mit denen er sowohl am Antriebsrahmenteil als auch an dem einen Rahmenteil ankuppelbar ist. Somit kann zum Einsteigen des Benutzers der Versteifungsschenkel komplett entnommen und anschließend wieder mit dem Antriebsrahmenteil und dem Rahmenteil verbunden werden.

Weitere Ausführungsformen ergeben sich aus den übrigen Unteransprüchen.

Die Erfindung wird im folgenden anhand der Zeichnung näher erläutert. Es zeigen:
- Figur 1: einen Teil eines ersten Ausführungsbeispiels eines Personenbeförderungsmittels in teilweise geschnittener Seitenansicht;
- Figur 2: eine Prinzipskizze eines Teils des in Figur 1 dargestellten Personenbeförderungsmittels entlang der Schnittlinie A-A;
- Figur 3: einen Teil eines weiteren Ausführungsbeispiels des Personenbeförderungsmittels in Vorderansicht,
- Figur 4: ein Teil eines bekannten, eingangs beschriebenen Personenbeförderungsmittels,
- Figur 5: in perspektivischer Seitenansicht ausschnittweise ein Personenbeförderungsmittel, und
- Figur 6: schematisch das Personenbeförderungsmittel der Figur 5 in Draufsicht.

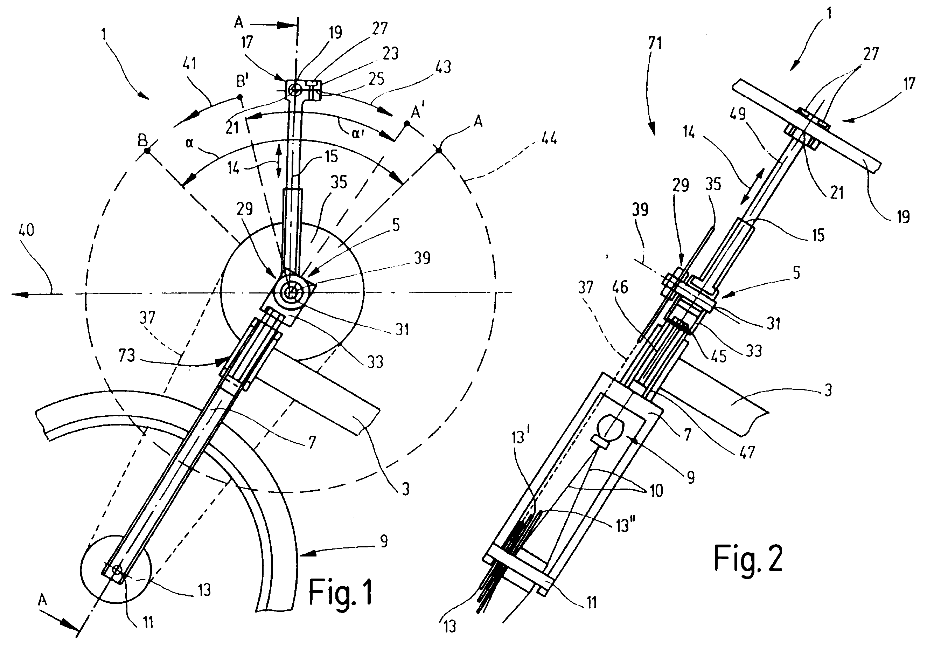

Das im folgenden beschriebene Personenbeförderungsmittel kann sowohl von Erwachsenen als auch von Kindern bedient werden. Es umfaßt wenigstens drei Räder, die derart angeordnet sind, daß das Personenbeförderungsmittel selbständig steht und nicht umkippt. Wenigstens eines der Räder, die üblicherweise eine Felge und einen Vollgummireifen oder einen Reifen und einen dazugehörigen Schlauch umfassen, ist mittels einer mit Muskelkraft betriebenen Antriebsvorrichtung antreibbar. Das Personenbeförderungsmittel ist universell einsetzbar, beispielsweise als Therapiegerät für die Rehabilitation von Personen nach einem Unfall oder einer Krankheit oder als ständiges Fortbewegungsmittel beziehungsweise -hilfe für Gehbehinderte. Das Personenbeförderungsmittel kann zum Beispiel anstelle eines Fahrrads auch als Freizeitgerät von körperlich unversehrten Personen benutzt werden. Die Antriebsvorrichtung des Personenbeförderungsmittels wird im folgenden anhand der Figuren 1 und 2 näher erläutert.

Figur 1 zeigt einen Teil eines Ausführungsbeispiels eines Personenbeförderungsmittels 1, das einen nur ausschnittsweise dargestellten Rahmen 3, eine daran angebrachte Antriebsvorrichtung 5 sowie eine Gabel 7 umfaßt. An der Gabel 7 ist eine Nabenwelle 11 des Rades 9 drehbeweglich befestigt. Mit der Nabenwelle 11 ist mindestens ein, vorzugsweise mehrere auch als Zahnkränze bezeichnete Kettenräder drehfest verbunden, von denen in Figur 1 nur ein Kettenrad 13 dargestellt ist.

Die Antriebsvorrichtung 5 umfaßt hier einen in Richtung eines Doppelpfeils 14 längenverstellbaren Antriebshebel 15, an dessen einen Ende eine Befestigungsvorrichtung 17 für ein Handbetätigungselement 19 vorgesehen ist. Die Befestigungsvorrichtung 17 ist bei dem in Figur 1 dargestellten Ausführungsbeispiel einstückig mit dem Antriebshebel verbunden. Alternativ ist möglich, daß die Befestigungsvorrichtung 17 und der Antriebshebel 15 stoffschlüssig oder reibschlüssig miteinander verbunden sind. An dem Antriebshebel 15 ist ein einen kreisrunden Querschnitt aufweisendes Handbetätigungselement 19 angebracht, das beispielsweise von einer geraden oder einer gebogenen Stange oder einem Rohr gebildet ist. Das Handbetätigungselement 19 ist in einer Durchgangsöffnung 21 der Befestigungsvorrichtung 17 angeordnet, in die ein von einer Außenfläche 23 der Befestigungsvorrichtung 17 ausgehender Schlitz 25 eingebracht ist. Der Durchmesser der Durchgangsöffnung 21 ist kleiner als der Außendurchmesser des Handbetätigungselements 19, wodurch der Schlitz 25 aufgespreizt wird. Um das Handbetätigungselement 19 sicher reibschlüssig in der Durchgangsöffnung 21 zu halten, sind im Bereich des Schlitzes 25 zwei Befestigungsmittel 27, hier Schrauben, vorgesehen. Diese verhindern ein weiteres Aufweiten des Schlitzes 25 und halten somit das Handbetätigungselement 19 reibschlüssig in der Durchgangsöffnung 21.

Der Antriebshebel 15 ist an seinem dem Handbetätigungselement 19 abgewandten Ende über einen an sich bekannten, nicht näher dargestellten Freilauf 29 mit einer Antriebswelle 31 gekoppelt. An der Antriebswelle 31, die drehbeweglich in einem U-förmigen Aufnahmeteil 33 gehalten ist (Figur 2), ist ein Kettenrad 35 drehfest angebracht, über das eine mit gestrichelter Linie dargestellte Kette 37 geführt wird. Die an ihren Enden verbundene, eine Schlaufe bildende Kette 37 wird ferner über eines der mit der Nabenwelle 11 wirksam verbundenen Kettenräder 13 geführt. Der Antriebshebel 15 ist um eine senkrecht zur Bildebene der Figur 1 verlaufende Achse 39, die quer oder im wesentlichen quer zur Fahrtrichtung (Pfeil 40) des Personenbeförderungsmittel 1 angeordnet ist, im und entgegen dem Uhrzeigersinn hin und her schwenkbar, wie mit Pfeilen 41 und 43 dargestellt. Die Achse 39 fällt bei diesem Ausführungsbeispiel mit der Längsachse der Antriebswelle 31 zusammen.

Das der Antriebswelle 31 zugeordnete Kettenrad 35, die geschlossene Kette 37 sowie die der Nabenwelle 11 zugeordnete Kettenräder 13, 13', 13'' (Figur 2) sind Teile eines Antriebsstrangs, der die auf das Handbetätigungselement 19 aufgebrachte Kraft auf das Rad 9 überträgt. Alternativ ist auch eine andere Ausgestaltung möglich, nämlich daß der Antriebsstrang anstelle der Kette mindestens ein starres Übertragungsglied umfaßt, beispielsweise eine Kardanwelle.

Der Antriebshebel 15 wirkt über den Freilauf 29 derart mit der Antriebswelle 31 zusammen, daß bei einer ersten Schwenkbewegung des Antriebshebels 15 in Richtung des Pfeils 41, also von einem nicht dargestellten, im Sitz des Beförderungsmittels 1 sitzenden Bedieners aus gesehen nach vorne, der Antriebshebel 15 und die Antriebswelle 31 gekoppelt sind, so daß die auf das Handbetätigungselement 19 aufgebrachte Kraft über den Antriebsstrang auf das Rad 9 übertragen wird. Beim Zurückschwenken des Antriebshebels 15 in Richtung des Pfeils 43, also in Richtung des Sitzes des Personenbeförderungsmittels, wird der Freilauf 29 wirksam, der den Antriebshebel 15 und die Antriebswelle 31 entkoppelt, so daß keine Kraft in die Antriebswelle 31 eingeleitet wird. Es wird also kein Drehmoment auf die Antriebswelle 31 aufgebracht. Ein in dem Sitz des Personenbeförderungsmittels 1 befindlicher Bediener drückt also das Handbetätigungselement 19 nach vorne von sich weg, um ein Drehmoment auf die Antriebswelle 15 aufzubringen. Dabei wird sein Körper gegen die Rückenlehne des Sitzes gedrückt und kann sich somit in vorteilhafter Weise abstützen. Das Zurückschwenken des Antriebshebels 15 erfolgt praktische ohne Kraftaufwand. Durch die vorteilhafte Kopplung des Antriebshebels 15 über den Freilauf 29 mit der Antriebswelle 31 kann der Bediener in einer ergonomisch richtigen, beispielsweise aufrechten Sitzhaltung die Kraft auf das Handbetätigungselement 19 aufbringen, was den Bedienungskomfort der mit Muskelkraft betriebenen Antriebsvorrichtung 5 verbessert. Dem Bediener ist es aufgrund des sich ständig wiederholenden Wechsels zwischen Kraftanstrengung (Belastung) beim Verschwenken des Antriebshebels 15 in Richtung des Pfeils 41 nach vorne und der "Ruhepause" (Entlastung) beim Zurückschwenken des Antriebshebels 15 in Richtung des Pfeils 43 möglich, auch über einen längeren Zeitraum rhythmisch zu atmen. Es hat sich gezeigt, daß durch eine gleichmäßige Atmung und einem Wechsel zwischen Belastung und Entlastung auch die Ausdauer des Bedieners verbessert wird.

Der Antriebshebel 15 ist um einen Winkel α um die Achse 39 verschwenkbar, der vom Bediener individuell variierbar ist. Es hat sich gezeigt, daß in einer bequemen, insbesonderen aufrechten Sitzhaltung eine angenehme Kraftübertragung möglich ist, wenn der Winkel α in einem Bereich von 40° bis 130°, vorzugsweise 50° bis 120°, insbesondere von 60° bis 110°, liegt. Selbstverständlich sind auch kürzere Hübe (α < 40°) oder längere Hübe (α > 130°) mit dem Antriebshebel möglich.

Der Sitz des Personenbeförderungsmittel weist zumindest während des Fahrens gegenüber der Achse 39 eine ortsfeste Position auf. Ein im Sitz befindlicher Bediener kann also auch die Lage des Umfangsbereichs des gedachten -in Figur 1 mit gestrichelter Linie dargestellten- Kreises 44, entlang dessen das Handbetätigungselement 19 verlagert wird, festlegen. Der Bediener kann also ohne weiteres den für ihn günstigsten Winkelbereich sowie die Lage des Umfangsbereichs des Kreises 44, über den er den Antriebshebel 15 verschwenkt, selbst bestimmen, so daß er beispielsweise eine für ihn als bequem empfundene Kraftübertragung realisieren kann. Bei dem in Figur 1 dargestellten Ausführungsbeispiel ist angedeutet, daß das Handbetätigungselement 19 von einem Punkt A am Umfang des Kreises 44 über einen Umfangsbereich von circa 90° zu einem auf dem Kreis 44 liegenden Punkt B und wieder zurück verlagerbar ist. Ferner ist rein beispielhaft angedeutet, daß das Hin- und Herschwenken des Antriebshebels 15 auch von einem Punkt A' zu einem Punkt B' und wieder zurück erfolgen kann. Der Winkel α', um den der Antriebshebel verschwenkt wird, beträgt hierbei circa 50°. Im Gegensatz dazu wird der bekannten Antriebsvorrichtung der gesamte Umfang des Kreises 44 zum Aufbringen eines Drehmoments auf die Antriebswelle mittels der Antriebskurbeln genutzt.

Es bleibt festzuhalten, daß dadurch, daß der Bediener sowohl den Winkel α als auch die Lage des Schwenkbereichs des Antriebshebels 15 zum Aufbringen eines Drehmoments auf die Antriebswelle in vorteilhafter Weise selbst festlegt, eine bequeme Kraftübertragung in einer angenehmen Sitzhaltung realisierbar ist.

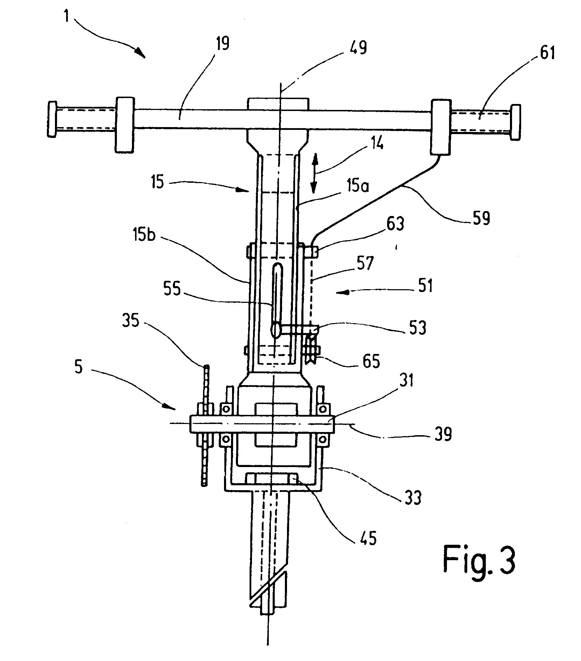

Die Länge des Antriebshebels 15 kann beliebig gewählt werden. Aufgrund der Hebelgesetze können dadurch bei einer konstanten, auf das Handbetätigungselement aufgebrachten Kraft, mit unterschiedlich langen Antriebshebeln ein mehr oder weniger großes Antriebsmoment auf die Antriebswelle aufgebracht werden. Bei dem in den Figuren 1 und 2 dargestellten Ausführungsbeispiel umfaßt der Antriebshebel 15 eine Hebellängenverstellvorrichtung, mit deren Hilfe in vorteilhafter Weise die Länge des Antriebshebels 15 von einem Bediener während des Betriebs beziehungsweise der Fahrt verstellt werden kann. Ein Ausführungsbeispiel der Hebellängenverstellvorrichtung wird im folgenden anhand von Figur 3 näher erläutert. Alternativ kann auch ein beispielsweise einstückiger Antriebshebel eingesetzt werden, der nicht längenverstellbar ist, also keine Hebellängenverstellvorrichtung umfaßt.

Figur 2 zeigt schematisch einen Teil des Personenbeförderungsmittel 1 gemäß Figur 1 in Vorderansicht. Gleiche Teile sind mit gleichen Bezugszeichen versehen, so daß insofern auf die Beschreibung zu Figur 1 verwiesen wird.

Aus der Darstellung gemäß Figur 2 ist ersichtlich, daß der Antriebshebel 15 und das Handbetätigungselement 19 im zusammengebauten Zustand eine T-Form aufweisen und einen Lenker für das Personenbeförderungsmittel bilden. Selbstverständlich sind auch andere Formen möglich. Das bei diesem Ausführungsbeispiel U-förmige Aufnahmeteil 33 ist mit Hilfe eines Befestigungselements 45, das bei diesem Ausführungsbeispiel von einer Schraube gebildet ist, an einem Verbindungsteil 47 der Gabel 7 befestigt. Hierzu wird die Schraube in eine aufspreizbare Spannhülse 46 eingeschraubt, wodurch eine reibschlüssige Verbindung geschaffen wird. Bei einer Drehung des Antriebshebels 15 um seine Längsachse 49 wird auch die das Rad 9 haltende Gabel 7 verschwenkt. Mit Hilfe des Handbetätigungselements 19 und des Antriebshebels 15 kann also in einfacher Weise das Personenbeförderungsmittel gesteuert und -wie oben beschrieben- angetrieben werden.

An dem Handbetätigungselement 19 können an sich bekannte Teile des Personenbeförderungsmittel befestigt werden, zum Beispiel eine Bremsklinke beziehungsweise zwei Bremsklinken zur Betätigung der in den Figuren nicht dargestellten Bremse, eine Schaltung, die die Kette 37 vom Kettenrad 13 auf eines der anderen Kettenräder 13', 13'' überführt oder umgekehrt, ein Beleuchtungsmittel, gegebenenfalls Blinker und dergleichen. Vorteilhaft hierbei ist, daß zur Betätigung dieser Teile die Hände nicht vom Lenker beziehungsweise vom Handbetätigungselement 19 genommen werden müssen, so daß eine sichere Bedienung möglich ist. Das Personenbeförderungsmittel kann beispielsweise also auch während dem Betätigen der -nicht dargestellten- Gangschaltung angetrieben und gelenkt werden, ohne daß dabei die Hände vom Handbetätigungselement genommen werden müssen. Dadurch kann eine hohe Bedienungssicherheit und ein hoher Bedienungskomfort sichergestellt werden.

Figur 3 zeigt einen Teil eines weiteren Ausführungsbeispiels des Personenbeförderungsmittels 1 in Vorderansicht. Teile, die mit denen anhand der Figuren 1 und 2 beschriebenen übereinstimmen, sind mit gleichen Bezugszeichen versehen, so daß insofern auf die Beschreibung verwiesen wird. Der Antriebshebel 15 ist mittels einer Hebellängenverstellvorrichtung 51 längenverstellbar und umfaßt einen Hebelschaft 15a, der in einem Hebelrohr 15b verschiebbar gehalten ist. Das Hebelrohr 15b ist an seinem dem Handbetätigungselement 19 abgewandten Ende in geeigneter Weise drehfest mit der Antriebswelle 31 gekoppelt. An dem freien, aus dem Hebelrohr 15b herausragenden Ende des Hebelschafts 15a ist das Handbetätigungselement 19 mittels der nicht näher dargestellten Befestigungsvorrichtung 17 angebracht. An dem Hebelschaft 15a ist ein Mitnehmerbolzen 53 befestigt, der radial` zumindest aber im wesentlichen radial zur Längsachse 49 des Antriebshebels 15 verläuft. Der Mitnehmerbolzen 53 ist in einem im Hebelrohr 15b eingebrachten Längsschlitz 55 geführt. Um den Längsschlitz 55 in dem Hebelrohr 15b in der in Figur 3 gewählten Ansicht darzustellen, ist dieser -in Umfangsrichtung des Hebelrohrs 15b gesehen- um 90° versetzt angeordnet. In der Darstellung gemäß Figur 3 ist der Hebelschaft 15a vollständig im Hebelrohr 15b eingefahren. Das heißt, der Mitnehmerbolzen 53 befindet sich -in vertikaler Richtung gesehen- in seiner unteren Endposition innerhalb des Längsschlitzs 55. An dem Mitnehmerbolzen 53 ist die Seele 57 eines Bowdenzugs 59 befestigt. Der Bowdenzug 59 ist an seinem dem Mitnehmerbolzen 53 abgewandten Ende an einem an dem Handbetätigungselement 19 angebrachten Drehgriff 61 befestigt. Aus Figur 3 ist noch ersichtlich, daß die Seele 57 des Bowdenzugs 59 durch eine nicht dargestellte Durchgangsöffnung eines Gegenlagers 63 geführt ist, an dem sich der Bowdenzug 59 abstützt. Des weiteren kann der Bowdenzug 59 wahlweise auch über eine Umlenkrolle 65 geführt werden, die unterhalb des Mitnehmerbolzens 53 drehbeweglich am Hebelrohr 15b gehalten ist.

Mittels der Hebellängenverstellvorrichtung 51 kann ein Bediener während der Fahrt des Personenbeförderungsmittels 1 die Länge des Antriebshebels 15, also inwieweit der Hebelschaft 15a aus dem Hebelrohr 15b herausragt, in einfacher Weise verstellen. Hierzu wird der Drehgriff 61 gedreht, wodurch -in Abhängigkeit der Drehrichtung des Drehgriffs 61-der Hebelschaft 15a aus dem Hebelrohr 15b quasi herausgezogen beziehungsweise in das Hebelrohr 15b versenkt wird. Das Aus fahren und insbesondere das Einfahren des Hebelschafts 15a in das Hebelrohr 15b erfolgt mit relativ geringer Kraft, vorzugsweise selbsttätig durch Betätigung des Drehgriffs 61.

Besonders vorteilhaft ist, daß die Längenverstellung des Antriebshebels 15 mittels der Hebellängenverstellvorrichtung 51 stufenlos vorgenommen werden kann, indem der Drehgriff 61 mehr oder weniger weit gedreht wird. Eine Antriebshebellängenverstellung ist beispielsweise notwendig, um an Steigungen oder beim Anfahren des Personenbeförderungsmittels große Antriebsmomente mit relativ geringer Kraft aufzubringen. Die anhand von Figur 3 beschriebene Drehgriffmechanik ist hierfür besonders gut geeignet, weil eine Betätigung durch den Bediener möglich ist, ohne daß er dazu den Antriebshebel 15 loslassen muß. Dadurch ergibt sich insbesondere eine hohe Betriebssicherheit.

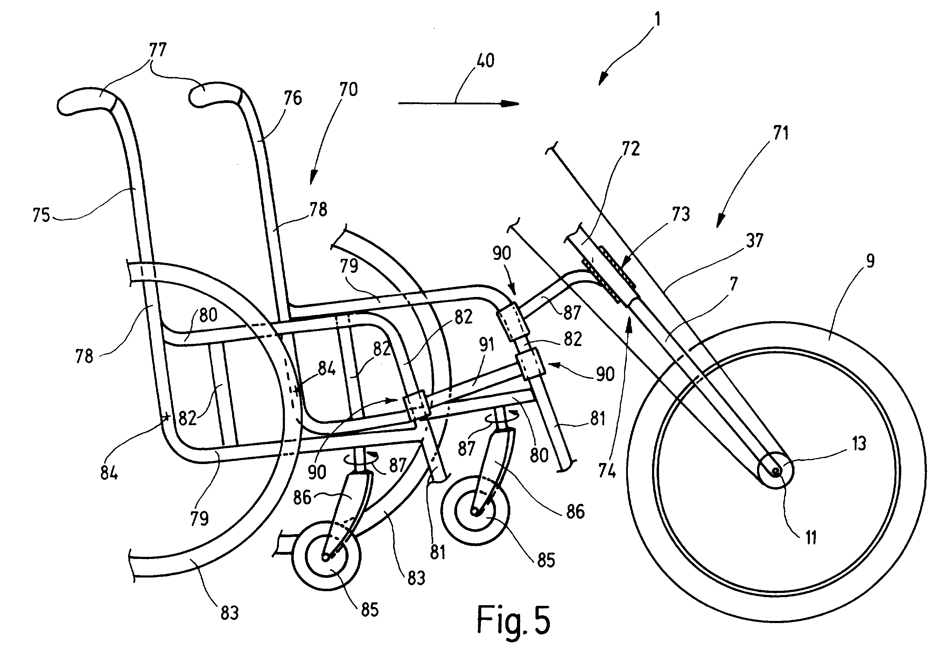

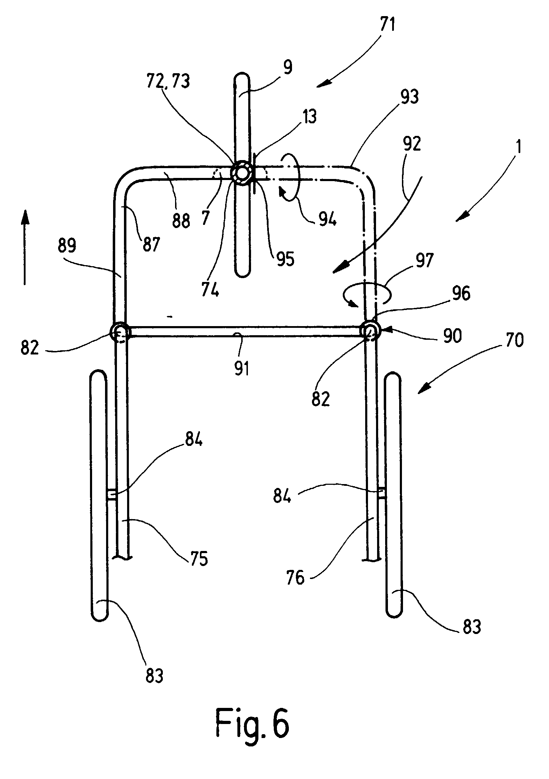

Besonders bevorzugt wird ein in den Figuren 5 und 6 dargestelltes Ausführungsbeispiel des Personenbeförderungsmittels, das zwei hintereinander angeordnete Fahrzeugteile umfaßt, wobei ein erstes Fahrzeugteil als Rollstuhl 70 ausgebildet ist und mit einem zweiten Fahrzeugteil 71 kuppelbar ist. Vorzugsweise ist an dem zweiten Fahrzeugteil die Antriebsvorrichtung 5 angeordnet. Der Aufbau des zweiten Fahrzeugteils kann dem in den Figuren 1 und 2 dargestellte Teil 71 des Personenbeförderungsmittels 1 entsprechen.

Aus allem wird deutlich, daß das Personenbeförderungsmittel sowohl aus mindestens zwei miteinander kuppelbaren Fahrzeugteilen, die hintereinander angeordnet sind, bestehen als auch von einem kompletten Fahrzeug mit einem nicht trennbaren Rahmen gebildet werden kann. Ein komplettes Fahrzeug, dessen Fahrzeugteile also nicht voneinander getrennt werden können, weist einen einstückigen Rahmen auf.

Zusammenfassend ist festzuhalten, daß durch die erfindungsgemäße Kopplung des Antriebhebels 15 über den Freilauf 29 mit der Antriebswelle 31 die zum Aufbringen eines Antriebsmoments auf die Antriebswelle erforderliche Kraft immer -vom Sitz aus gesehen- nach vorne in Fahrtrichtung des Personenbeförderungsmittels gerichtet ist. Zum Antreiben drückt der Bediener den Antriebshebel nach vorne vom Körper weg und schwenkt ihn praktisch ohne Kraftanstrengung zurück (Leerhub). Dadurch ist in einer aufrechten Sitzhaltung eine optimale, für den Bediener aufgrund des einstellbaren Schwenkwinkels und des frei wählbaren Umfangsbereich des Kreises 44, entlang dessen das Handbetätigungselement 19 verlagert wird, eine günstige Kraftübertragung möglich. Ferner ist eine gegenüber den bekannten Personenbeförderungsmitteln verbesserte Ergonomie realisierbar.

In Figur 5 ist ein erfindungsgemäßes Personenbeförderungsmittel 1 dargestellt, welches den ersten Fahrzeugteil 70 aufweist, welcher insbesondere als Rollstuhl ausgebildet ist. Außerdem weist das Personenbeförderungsmittel 1 den zweiten Fahrzeugteil 71 auf, der die Gabel 7 umfaßt, die an ihrem einen Ende das Rad 9 trägt und an ihrem anderen Ende zusammenläuft und in einen Einrohrrahmenteil 72 übergeht, der in einem sogenannten Lenkkopflager 73 drehbeweglich gehalten ist. An seinem oberen Ende trägt der Einrohrrahmenteil 72 die Antriebsvorrichtung 5, die im Zusammenhang mit den Figuren 1 bis 3 vorstehend erläutert ist. Der Einrohrrahmenteil 72 und die Gabel 7 bilden einen Antriebsrabmenteil 74, der über das Lenkkopflager 73 schwenk- beziehungsweise drehbeweglich mit dem hinteren Fahrzeugteil 70 verbunden ist.

Das auch als hintere Fahrzeugteil bezeichnete erste Fahrzeugteil 70 weist zwei parallel und in einem Abstand zueinander liegende Rahmenteile 75 und 76 auf, die den Rahmen des auch als Rollstuhl bezeichneten ersten Fahrzeugteils 70 bilden. Die Rahmenteile 75 und 76 sind im wesentlichen identisch ausgebildet. Sie weisen an ihrem oberen Ende jeweils einen Handgriff 77 auf, der jeweils an einem Ende eines im wesentlichen senkrecht liegenden Teilrahmens 78 angeordnet ist. Zwischen den beiden Teilrahmen 78 der Rahmenteile 75 und 76 liegt die Rückenlehne (nicht dargestellt) des Rollstuhls, also des ersten Fahrzeugteils 70. Die Teilrahmen 78 verzweigen beabstandet von den Handgriffen 77 in zwei im wesentlichen senkrecht zu ihnen verlaufende weitere Teilrahmen 79 und 80, die in ihrem weiteren Verlauf wieder in einen senkrechten Teilrahmen 81 übergehen, an dessen Ende hier nicht dargestellte Fußauflagen angeordnet sind. Zwischen zwei Teilrahmen 79 und 80 sind jeweils zwei Verbindungsstreben 82 vorgesehen, die im wesentlichen parallel zum Teilrahmen 78 verlaufen.

An beiden Rahmenteilen 75 und 76 sind jeweils Haupträder 83 drehbar angeordnet, wobei deren Drehachse 84 im unteren Bereich der Teilrahmen 78 liegt. In Fahrtrichtung 40 gesehen, liegen vor den Haupträdern 83 jeweils am Rahmenteil 75 beziehungsweise 76 angeordnete Rollen 85, wobei jede Rolle 85 in einer Lageraufnahme 86 drehbar gehalten ist. Die Lageraufnahme 86 ist jeweils an ihrem Rahmenteil 75 beziehungsweise 76 in Pfeilrichtung 87 drehbar angeordnet. Die Rollen 75 haben jedoch keinen Bodenkontakt, wenn das erste Fahrzeugteil 70 und das zweite Fahrzeugteil 71 miteinander verbunden sind.

Anhand der Figuren 5 und 6 wird nun die Verbindung zwischen dem ersten Fahrzeugteil 70 und dem zweiten Fahrzeugteil 71 näher beschrieben, wobei in der Figur 6 gleiche Teile wie in Figur 5 mit denselben Bezugszeichen versehen sind. Die Figur 6 zeigt das Personenbeförderungsmittel 1 der Figur 5 schematisch in einer Draufsicht von oben. Die Rahmenteile 75 und 76 sind stark vereinfacht wiedergegeben. Es ist ersichtlich, daß der Antriebsrahmenteil 74 über einen L-förmigen Anlenkschenkel 87 mit dem Rahmenteil 75, vorzugsweise an der vorderen Verbindungsstrebe 82 verbunden ist. Der Anlenkschenkel 87 ist im Bereich des Lenkkopflagers 73 mit dem Antriebsrahmenteil 74 verbunden. Er geht senkrecht zur Fahrtrichtung 40, also seitlich vom Antriebsrahmenteil 74 mit einem Basisschenkel 88 aus, dessen Länge so bemessen ist, daß sein Ende etwa auf Höhe des Rahmenteils 75 liegt. Der Basisschenkel 88 geht in einem im wesentlichen rechtwinkligen Knick in den Schenkel 89 über, der mit der Verbindungsstrebe 82 beziehungsweise dem Rahmenteil 75 verbunden ist. Für diese Verbindung kann eine in Figur 5 lediglich schematisch dargestellte Kupplungseinrichtung 90 vorgesehen sein, die am Ende des Schenkels 89 vorgesehen ist. Somit ist der zweite Fahrzeugteil 71 mit dem ersten Fahrzeugteil 70 lösbar verbindbar. Die Kupplungseinrichtung 90 weist vorzugsweise zwei halbschalenartige Teile, die -in Kupplungsstellung-die Verbindungsstrebe 82 umgreifen. Beide Halbschalen sind in Kupplungsstellung gesichert, so daß eine Relativdrehung bezüglich der Verbindungsstrebe 82 verhindert ist.

Um die Steifigkeit des gesamten Rahmens des Personenbeförderungsmittels 1 zu erhöhen, ist zwischen den vorderen Verbindungsstreben 82 mindestens eine Querstrebe 91 vorgesehen, die vorzugsweise mit zwei Kupplungseinrichtungen 90 ausgestattet ist, so daß die Querstrebe 91 mit den Verbindungsstreben 82 lösbar verbindbar beziehungsweise an- und abkuppelbar ist.

Aus der Figur 6 ergibt sich, daß der Anlenkschenkel 87 auf der Seite des Personenbeförderungsmittels 1 liegt, die der Seite gegenüberliegt, die die Antriebsvorrichtung 5 trägt, wobei von der Antriebsvorrichtung lediglich das Kettenrad 13 des Rades 9 dargestellt ist. Somit wird der Einstieg von rechts (Pfeil 92) in das Personenbeförderungsmittels 1 wesentlich erleichtert, da der Benutzer nicht über den Anlenkschenkel 87 steigen muß.

In Figur 6 ist strichpunktiert ein Versteifungsschenkel 93 gezeigt, der zwischen dem Antriebsrahmenteil 74 und dem Rahmenteil 76 vorgesehen ist. Der Versteifungsschenkel 93 geht seitlich vom Antriebsrahmenteil 74 im Bereich des Lenkkopflagers 73 aus, ist jedoch mit dem Antriebsrahmenteil 74 entweder schwenkbar (Pfeil 94) oder an den Antriebsrahmenteil 74 mittels einer Kupplungseinrichtung 90 ankuppelbar, wobei die Kupplungseinrichtung an dem einen Ende 95 des Versteifungsschenkels 93 vorgesehen ist. An seinem anderen Ende 96 weist der Versteifungsschenkel 93 eine Kupplungseinrichtung 90 auf, mit der er an die vordere Verbindungsstrebe 82 des Rahmenteils 76 ab- und ankuppelbar ist. Dadurch, daß der Versteifungsschenkel 93 an seinem Ende 95 schwenkbar am Antriebsrahmenteil 94 angelenkt ist, kann er vor dem Einsteigen eines Benutzers verschwenkt werden, so daß der Einstieg 92 freigegeben ist. Nachdem der Benutzer im ersten Fahrzeugteil 70 Platz genommen hat, kann der Versteifungsschenkel 93 zurückgeschwenkt werden, um dann mit seiner Kupplungseinrichtung 90 an der Verbindungsstrebe 82 angekuppelt zu werden. Somit ergibt sich eine besonders feste Verbindung zwischen dem Antriebsrahmenteil 74 und dem ersten Fahrzeugteil 70.

Selbstverständlich kann auch vorgesehen sein, daß der Versteifungsschenkel 93 schwenkbar (Pfeil 97) an der vorderen Verbindungsstrebe 82 des Rahmenteils 76 angelenkt ist, wobei dann eine Kupplungseinrichtung 90 an seinem Ende 95 vorgesehen ist, um den Versteifungsschenkel 93 mit dem Antriebsrahmenteil 74 zu verbinden.

Es kann auch vorgesehen sein, daß zwei Anlenkschenkel 87 vorgesehen sind, die -gemäß Figur 6- hintereinanderliegen, also -gemäß Figur 5- übereinander angeordnet sind. In bevorzugter Ausführungsform ist dann der zweite Anlenkschenkel identisch mit dem Anlenkschenkel gemäß Figur 5 beziehungsweise Figur 6 ausgebildet. Das heißt, er kann ebenfalls eine Kupplungseinrichtung 90 aufweisen.

Bei einem hier nicht dargestellten Ausführungsbeispiel ist anstelle der Halbschalen aufweisenden Kupplungseinrichtung 90 vorgesehen, daß am Rahmenteil 76 eine Aufnahme vorgesehen ist, in die der Anlenkschenkel 87 einsteckbar ist. Die Aufnahme ist also so ausgebildet, daß der Anlenkschenkel 87 in diese Aufnahme einsteckbar und dort beispielsweise mit einer Schnellverschlußsicherung arretiert werden kann. Als Schnellverschlußsicherung können beispielsweise federbelastete Bolzen verwendet werden, die aus dem Mantel des Anlenkschenkels 87 herausragen und in eine entsprechende Öffnung beziehungsweise Durchbruch in der Aufnahme einrasten. Selbstverständlich kann der Anlenkschenkel 87 in der Aufnahme, in der er eingesteckt ist, mit einem Bolzen gesichert werden, der durch Durchbrüche beziehungsweise Bohrungen in der Aufnahme und dem Anlenkschenkel hindurchgreift. Selbstverständlich können auch mehrere Bolzen vorgesehen sein. Natürlich ist es auch möglich, daß die Aufnahme und/oder der Anlenkschenkel mehrere Durchbrüche aufweisen, so daß eine Längenverstellung möglich ist. Das heißt, der Anlenkschenkel 87 kann in unterschiedlichen Einsteckpositionen beziehungsweise Einstecktiefen in der Aufnahme gesichert werden. Als Profil für die Anlenkschenkel beziehungsweise für den Anlenkschenkel 87, den Versteifungsschenkel 93 und/oder die Aufnahme können Mehrkantrohre, insbesondere Vierkantrohre, oder runde Rohrprofile verwendet werden.

Außerdem kann am Antriebsrahmenteil 74 zumindest eine abnehmbare, ausklappbare und/oder verschwenkbare Stützeinrichtung (nicht dargestellt) vorgesehen sein, die sich am Boden abstützt und die insbesondere von einem im ersten Fahrzeugteil 70 sitzenden Benutzer betätigt werden kann. Diese Stützeinrichtung kann beispielsweise dann betätigt werden, wenn eine Abkopplung des zweiten Fahrzeugteils 71 vom ersten Fahrzeugteil 70 vorgenommen werden soll. Dabei kann der Benutzer im ersten Fahrzeugteil 70 sitzen bleiben und das zweite Fahrzeugteil 71 abkoppeln, ohne daß dieses bei ausgeklappter oder ausgeschwenkter Stützeinrichtung umfallen würde. Natürlich kann das auf der Stützeinrichtung abgestellte zweite Fahrzeugteil 71 auch durch den Benutzer, der im ersten Fahrzeugteil 70 sitzt, leicht wieder angekoppelt werden.

## Patentansprüche

1. Antriebsvorrichtung für ein Personenbeförderungsmittel, insbesondere Rollstuhl, das mindestens einen Sitz mit einer Rückenlehne umfaßt, mit mindestens einem Handbetätigungselement, mit dessen Hilfe ein Drehmoment auf eine Antriebswelle aufbringbar ist, wobei die auf das Handbetätigungselement aufgebrachte Kraft über einen Antriebsstrang auf mindestens ein Rad des Personenbeförderungsmittels übertragen wird, **dadurch gekennzeichnet**, daß das Handbetätigungselement (19) mit mindestens einem um eine Achse (39) hin und her schwenkbaren Antriebshebel (15) zusammenwirkt, daß der Antriebshebel (15) über einen Freilauf (29) mit der Antriebswelle (31) gekoppelt ist, derart, daß bei einer ersten Schwenkbewegung des Antriebshebels (15) -vom Sitz aus gesehen- nach vorne der Antriebshebel (15) und die Antriebswelle (31) gekoppelt und beim Zurückschwenken der Antriebshebel (15) und die Antriebswelle (31) entkoppelt sind.

2. Antriebsvorrichtung nach Anspruch 1, **dadurch gekennzeichnet**, daß der Winkel (α), um den der Antriebshebel (15) schwenkbar ist, variierbar ist.

3. Antriebsvorrichtung nach Anspruch 2, **dadurch gekennzeichnet**, daß der Antriebshebel (15) um einen Winkel (α) verschwenkbar ist, der in einen Bereich von 40° bis 130°, vorzugsweise 50° bis 120°, insbesondere 60° bis 110°, liegt.

4. Antriebsvorrichtung nach einem der vorhergehenden Ansprüche, **dadurch gekennzeichnet**, daß die Achse (39) quer oder im wesentlichen quer zur Fahrtrichtung verläuft.

5. Antriebsvorrichtung nach einem der vorhergehenden Ansprüche, **dadurch gekennzeichnet**, daß die Länge des Antriebshebels (15) mittels einer Hebellängenverstellvorrichtung (51) verstellbar, vorzugsweise einstellbar, ist.

6. Antriebsvorrichtung nach einem der vorhergehenden Ansprüche, **dadurch gekennzeichnet**, daß der Antriebshebel (15) und das Handbetätigungselement (19) im zusammengebauten Zustand eine T-Form aufweisen.

7. Antriebsvorrichtung nach einem der vorhergehenden Ansprüche, **dadurch gekennzeichnet**, daß der Antriebsstrang mindestens ein mit der Antriebswelle (15) drehfest verbundenes Kettenrad (35) und eine darüber geführte Kette (37) umfaßt.

8. Antriebsvorrichtung nach einem der vorhergehenden Ansprüche 1 bis 6, **dadurch gekennzeichnet**, daß der Antriebsstrang mindestens eine Kardanwelle umfaßt.

9. Antriebsvorrichtung nach einem der vorhergehenden Ansprüche, **dadurch gekennzeichnet**, daß an dem Antriebshebel (15) und/oder dem Handbetätigungselement (19) mindestens ein Bremsbetätigungselement, mindestens ein Schaltelement einer Gangschaltung und/oder mindestens ein Betätigungselement für einen Fahrtrichtungsanzeiger (Blinker) angebracht ist.

10. Personenbeförderungsmittel mit mindestens einem eine Rückenlehne umfassenden Sitz und einer Antriebsvorrichtung, die mindestens ein Handbetätigungselement umfaßt, mit dessen Hilfe ein Drehmoment auf eine Antriebswelle aufbringbar ist, wobei die auf das Handbetätigungselement aufgebrachte Kraft über einen Antriebsstrang auf mindestens ein Rad übertragen wird, **dadurch gekennzeichnet**, daß das Handbetätigungselement (19) mit mindestens einem um eine Achse (39) hin und her schwenkbaren Antriebshebel (15) zusammenwirkt, daß der Antriebshebel (15) über einen Freilauf (29) mit der Antriebswelle (31) gekoppelt ist, derart, daß bei einer ersten Schwenkbewegung des Antriebshebels (15) -vom Sitz aus gesehen- nach vorne der Antriebshebel (15) und die Antriebswelle (31) gekoppelt und beim Zurückschwenken der Antriebshebel (15) und die Antriebswelle (31) entkoppelt sind.

11. Personenbeförderungsmittel nach Anspruch 10, **dadurch gekennzeichnet**, daß es zwei hintereinander angeordnete Fahrzeugteile umfaßt.

12. Personenbeförderungsmittel nach einem der Ansprüche 10 oder 11, **dadurch gekennzeichnet**, daß ein erstes Fahrzeugteil als Rollstuhl ausgebildet und mit einem zweiten Fahrzeugteil kuppelbar ist.

13. Personenbeförderungsmittel nach einem der Ansprüche 10 bis 12, **dadurch gekennzeichnet**, daß die Antriebsvorrichtung (5) an dem zweiten Fahrzeugteil angeordnet ist.

14. Personenbeförderungsmittel nach einem der Ansprüche 10 bis 13, **dadurch gekennzeichnet**, daß der Antriebsstrang mindestens eine Kardanwelle umfaßt.

15. Personenbeförderungsmittel nach einem der Ansprüche 10 bis 14, **dadurch gekennzeichnet**, daß an dem Antriebshebel (15) und/oder dem Handbetätigungselement (19) mindestens ein Bremsbetätigungselement, mindestens ein Schaltelement einer Gangschaltung und/oder mindestens ein Betätigungselement für einen Fahrtrichtungsanzeiger (Blinker) angebracht ist.

16. Personenbeförderungsmittel mit mindestens einem eine Rückenlehne umfassenden Sitz und einer Antriebsvorrichtung, insbesondere nach einem oder mehreren der Ansprüche 1 bis 9, die mindestens ein Handbetätigungselement umfaßt, mit dessen Hilfe ein Drehmoment auf eine Antriebswelle aufbringbar ist, wobei die auf das Handbetätigungselement aufgebrachte Kraft über einen Antriebsstrang auf mindestens ein Rad übertragen wird, und wobei das Personenbeförderungsmittel zwei parallel und beabstandet zueinander liegende Rahmenteile und einen Antriebsrahmenteil aufweist, an dem die Antriebsvorrichtung, der Antriebsstrang und das Rad angeordnet sind, **dadurch gekennzeichnet**, daß der Antriebsrahmenteil (74) mit einem seitlich von ihm ausgehenden Anlenkschenkel (87) an einem der Rahmenteile (75,76) angelenkt ist.

17. Personenbeförderungsmittel nach Anspruch 16, **dadurch gekennzeichnet**, daß der Anlenkschenkel (87) am Antriebsrahmenteil (74) fest angebracht und an den einen Rahmenteil (75,76) lösbar ankuppelbar ist.

18. Personenbeförderungsmittel nach Anspruch 16, **dadurch gekennzeichnet**, daß der Anlenkschenkel (87) fest mit dem Antriebsrahmenteil (74) und fest mit dem einen Rahmenteil (75,76) verbunden ist.

19. Personenbeförderungsmittel nach Anspruch 16, **dadurch gekennzeichnet**, daß zwischen den beiden Rahmenteilen (75,76) eine Querstrebe (91) vorgesehen ist.

20. Personenbeförderungsmittel nach Anspruch 19, **dadurch gekennzeichnet**, daß die Querstrebe (91) lösbar verbindbar mit den Rahmenteilen (75,76) ist.

21. Personenbeförderungsmittel nach Anspruch 19, **dadurch gekennzeichnet**, daß die Querstrebe (91) fest mit dem Anlenkschenkel (87) verbunden, aber lösbar am Rahmenteil (75,76) ankuppelbar ist.

22. Personenbeförderungsmittel nach einem der Ansprüche 16 bis 21, **dadurch gekennzeichnet**, daß zwischen dem Antriebsrahmenteil (74) und dem anderen Rahmenteil (75,76) ein Versteifungsschenkel (93) einsetzbar ist.

23. Personenbeförderungsmittel nach Anspruch 22, **dadurch gekennzeichnet**, daß der Versteifungsschenkel (93) mit einem Ende (95) am Antriebsrahmenteil (74) oder am anderen Rahmenteil (75,76) schwenkbar angeordnet ist und an seinem anderen Ende (96) eine Kupplungseinrichtung (90) aufweist.

24. Personenbeförderungsmittel nach Anspruch 22, **dadurch gekennzeichnet**, daß der Versteifungsschenkel (93) an seinen beiden Enden (95,96) eine Kupplungseinrichtung (90) aufweist, wobei eine der Kupplungseinrichtungen (90) mit dem Antriebsrahmenteil (74) und die andere mit dem Rahmenteil (75,76) verbindbar ist.
